# EUROPÄISCHE PATENTSCHRIFT

(11) **EP 0 696 776 B1**
(45) Veröffentlichungstag und Bekanntmachung des Hinweises auf die Patenterteilung: **19.11.2003**
(21) Anmeldenummer: 95111308.3
(22) Anmeldetag: 19.07.1995
(51) Int. Cl.: G06K 13/08

(54) **Datenkartenaufnahme**
Device for receiving data cards
Dispositif de réception de carte de données

(30) Priorität: 10.08.1994 DE 4428276
(43) Veröffentlichungstag der Anmeldung: 14.02.1996
(73) Patentinhaber: Siemens Aktiengesellschaft, 80333 München (DE)
(72) Erfinder: Hug, Klaus, Dipl-Ing. (FH), D-78727 Oberndorf (DE)

(56) Entgegenhaltungen:
- EP-A- 0 191 413
- EP-A- 0 342 407
- DE-A- 3 916 783
- US-A- 5 239 776
- PATENT ABSTRACTS OF JAPAN vol. 015, no. 399 (P-1261), 9. Oktober 1991 (1991-10-09) & JP 03 160586 A (OLYMPUS OPTICAL CO LTD), 10. Juli 1991 (1991-07-10)
- PATENT ABSTRACTS OF JAPAN vol. 014, no. 445 (P-1110), 25. September 1990 (1990-09-25) -& JP 02 176987 A (OMRON TATEISI ELECTRON CO), 10. Juli 1990 (1990-07-10)
- PATENT ABSTRACTS OF JAPAN vol. 016, no. 050 (P-1308), 7. Februar 1992 (1992-02-07) -& JP 03 250388 A (ANRITSU CORP), 8. November 1991 (1991-11-08)

## Beschreibung

Die Erfindung betrifft eine Datenkartenaufnahme mit einer Vorrichtung zum unzugänglichen Abdecken wenigstens eines dem Eingeben bzw. Entnehmen von Datenkarten zugeordneten Eingabeschlitzes und einem Gehäuse mit im wesentlichen quaderförmigen Umrissen. Derart ausgerüstete Datenkartenaufnahmen sind insbesondere dann erforderlich, wenn vermieden werden muß, daß die Datenübertragung zwischen einem Datenerfassungsgerät und einer Datenkarte in betrügerischer Absicht gestört werden kann, beispielsweise dadurch, daß während der Datenübertragung eine Datenkarte kurzzeitig gezogen und wieder gesteckt wird oder daß elektrisch leitendes Material in den Eingabeschlitz eingeführt wird und/oder wenn in dem Einsatzmilieu eine relativ hohe Verschmutzungsgefahr besteht und die Möglichkeit von Lageänderungen der Datenkarten durch Erschütterungen gegeben ist.

Eine solche Situation ist beispielsweise bei der Erfassung von Fahrtdaten in Kraftfahrzeugen gegeben,wo, wie aus der EP 0191413 B1 hervorgeht, den Fahrern mit Halbleiterspeichern versehene Datenkarten zugeordnet sind. Diese bieten gegenüber der bisher üblichen ausschließlichen Registrierung von Fahrtdaten auf Diagrammscheiben einen für die Erfassung der Arbeits- und Ruhezeiten zweckmäßigen, beispielsweise einen Monat umfassenden, Registrierzeithorizont.

Die Verwendung einer Datenkartenaufnahme im Kraftfahrzeug, und zwar im haptischen Bereich des bzw. der Fahrer, die Eignung für einen Einbau in einem Gerät, wie es die BP 0191413 B1 beschreibt, oder die Möglichkleit des Einbaus als autonomes Aggregat im Armaturenbrett eines Kraftfahrzeuges erfordern einerseits eine zuverlässige Funktion bei rauhen Betriebsbedingungen, andererseits eine besonders kostengünstige Konstruktion und somit ein hohes Maß an Serienfertigungsfähigkeit. Zusätzlich stellt sich bei der angestrebten Datenkartenaufnahme die Aufgabe, daß sie eine möglichst gute Raumnutzung bietet und im abgedeckten Zustand des oder der Eingabeschlitze mit einer weitgehend gehäusebündigen Frontfläche auch ästhetischen Ansprüchen gerecht wird und somit vielseitig einsetzbar ist.

Vorrichtungen mit den Datenkarten zugeordneten Schlitten sind aufgrund des konstruktiven Aufwandes und des Raumbedarfs für die angestrebte Datenkartenaufnahme nicht brauchbar. Einrichtungen, welche die Datenkarten frontseitig umgreifende Riegel vorsehen, erfüllen weder die ästhetischen Anforderungen noch diejenigen des Manipulationsschutzes.

Aus der US-A-5 239 776 ist ein Garagentorantrieb bekannt, bei der ein Garagentor über einen Schieber in einer Kulissenführung bewegbar ist.

Aus der JP-A-03 160 586 ist ein Verschluss für Datenkartenleser bekannt, bei dem über ein Seil, einen Schieber und einen Mechanismus eine Blende aufgezogen wird.

Aus der JP-A-02 176 987 ist ein Verschluss für Datenkartenleser mit zwei Elektromagneten bekannt.

Die JP-A- 03 250 388 offenbart einen Verschluss für einen Datenkartenleser, der von einem Motor über eine Zahnstange und einen Schieber angetrieben wird.

Aus der EP-A-347 407 ist ein Verschluss für Datenkartenleser mit den Merkmalen des Oberbegriffs des Anspruchs 1 bekannt. In der letztgenannten Schrift wird eine Blende senkrecht zur Bewegungsrichtung der Datenkarte verschoben. Hierbei ist die Blende mit Verzahnungen versehen, die im Eingriff mit Zahnrädern eines Elektromotors stehen und so die Blende durch ein Drehen des Elektromotors bewegt wird.

Aufgabe der Erfindung ist es, den Raumbedarf der Vorrichtung zu verringern. Diese Aufgabe wird durch eine Datenkartenaufnahme mit den Merkmalen des Anspruch 1 gelöst.

Vorteilhafte Ausgestaltungen der Erfindung beschreiben die Unteransprüche.

Abgesehen davon, daß die gefundene Lösung die gestellte Aufgabe in vollem Umfange löst, bietet sie zusätzlich den Vorteil, daß eine weitgehend ebene Frontfläche gestaltet werden kann und aus der Frontfläche herausschwenkende Verschlußelemente vermieden sind. Dabei ist, wie die Zeichnungen verdeutlichen, der Raumbedarf für die in besonderer Weise zugriffssichere Konstruktion sehr gering. Erwähnenswert ist ferner, daß die für das Abdecken der Eingabeschlitze vorgesehenen Klappen in der zurückgezogenen Stellung, d. h. bei geöffneter Datenkartenaufnahme, zusätzlich die Funktion eines den Eingabeschlitzen zugeordneten Führungselementes haben.

Im folgenden sei die Erfindung anhand der Zeichnungen näher erläutert. Es zeigen:
Fig. 1 eine Frontansicht einer für zwei im wesentlichen deckungsgleich übereinander eingebbaren Datenkarten ausgebildete Datenkartenaufnahme mit abgedeckten Eingabeschlitzen,
Fig. 2 eine mehrfach aufgebrochene Draufsicht der Datenkartenaufnahme gemäß Fig. 1 in Pfeilrichtung A,
Fig. 3 eine Seitenansicht der Datenkartenaufnahme mit zurückgeschobenen Klappen und somit zugänglichen Eingabeschlitzen,
Fig. 4 eine Seitenansicht der Datenkartenaufnahme, in der der Fig. 1 entsprechenden geschlossenen Stellung.

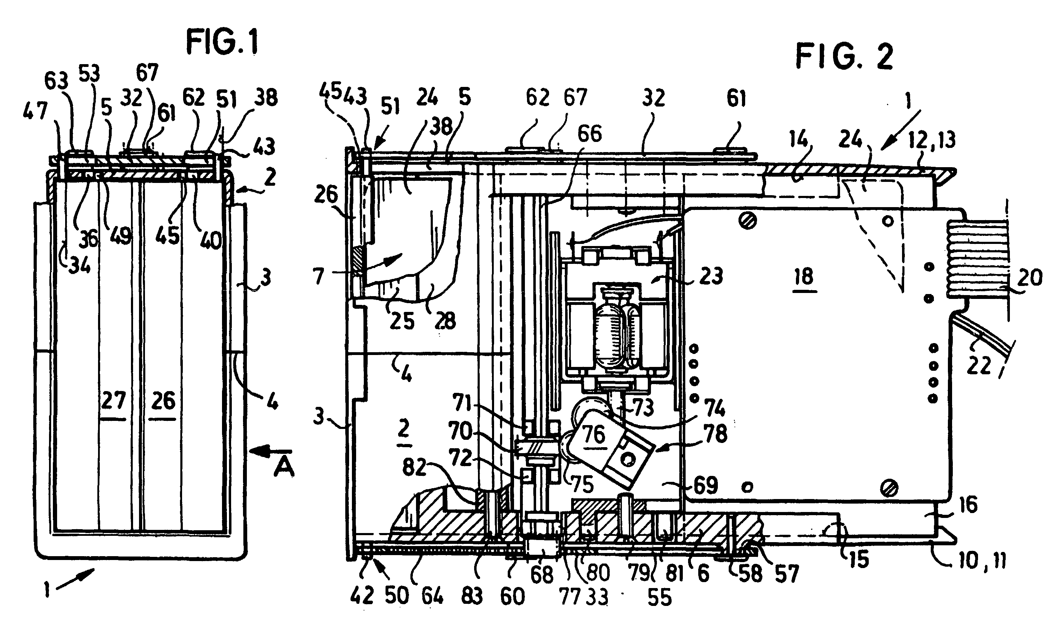

wie aus den Figuren 1 und 2 hervorgeht, ist die erfindungsgemäße Datenkartenaufnahme 1 als Einbauaggregat ausgebildet, dessen Gehäuse 2, das frontseitig mit einem Anschlagkragen 3 versehen ist, aus zwei Gehäusebauteilen besteht, die vorzugsweise mittels nicht dargestellter Rastelemente miteinander verbindbar sind. Dabei ist die Fügeebene 4 zwischen den Gehäusebauteilen parallel zu den Seitenwänden 5 und 6 des Gehäuses 2 vorgesehen, was bei den den Seitenwänden 5, 6 zugeordneten Funktionen spritzgußtechnisch zweckmäßig ist.

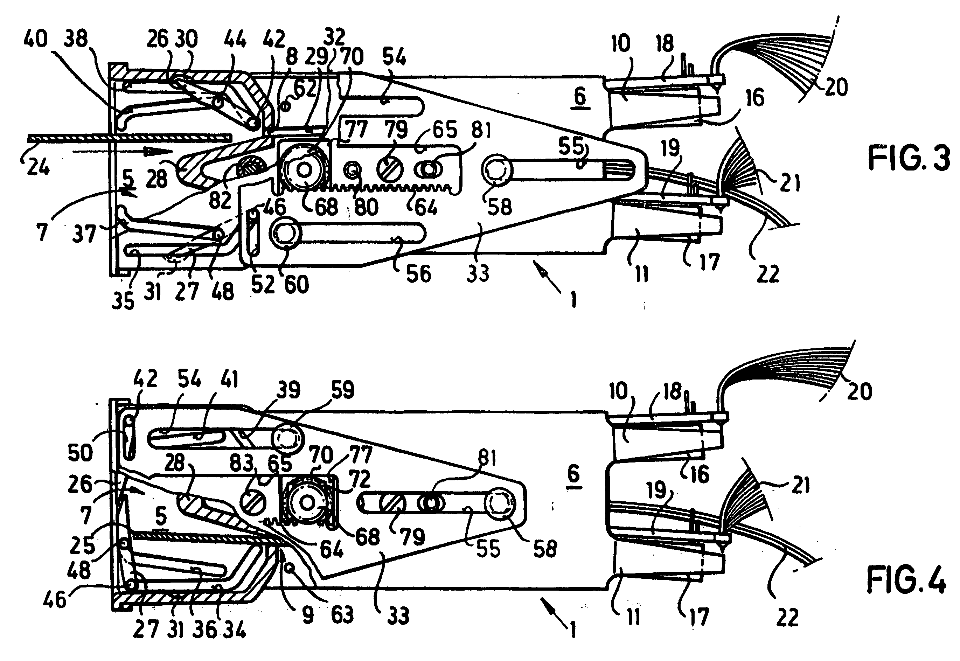

Beim Zusammenfügen der Gehäusebauteile wird eine frontseitig offene Kammer 7 gebildet, in deren nicht näher bezeichneter Rückwand Eingabeschlitze 8 und 9 (siehe Fig. 3 und 4) ausgeformt sind. Die Seitenwände 5, 6 bilden außerhalb der Kammer 7 freistehende Montageschenkel, in deren Verlängerung jeweils zwei Rastklinken 10, 11 bzw. 12, 13 angeformt sind. Diese stellen zusammen mit in den Seitenwänden 5, 6 ausgebildeten von der Rückseite des Gehäuses 2 zugänglichen Nuten, von denen zwei in Fig. 2 mit 14 und 15 bezeichnet sind, Befestigungsmittel für den Datenkarten zugeordnete Halte- und Kontaktiervorrichtungen 16 und 17 dar. Letztere beinhalten in an sich bekannter Weise federnde Kontaktsätze, die beim Einschieben einer Datenkarte in den Schacht einer Halte- und Kontaktiervorrichtung 16 bzw. 17 in Wirkverbindung mit auf der Datenkarte ausgebildeten Kontaktflächen treten. Den Halte- und Kontaktiervorrichtungen 16 und 17 sind sozusagen als Steckverbinder Leiterplatten 18 und 19 zugeordnet, die mit jeweils einem die Datenleitungen zusammenfassenden flexiblen Leiterband 20 und 21 kontaktiert sind und mit elektronischen Bauteilen für die weitere Datenbehandlung bestückt sein können. Ein Leiterpaar 22 ist für die Ansteuerung eines Elektromotors 23 vorgesehen, dessen Funktion später näher erläutert wird.

Mit 24 ist eine in Fig. 2 dargestellte und in Abfrageposition befindliche Datenkarte bezeichnet, d. h. in Fig. 2 sind zur Verdeutlichung der Lage der Datenkarte 24 in der Datenkartenaufnahme 1 lediglich eine vordere Ecke und eine in der Halte- und Kontaktiervorrichtung 16 befindliche Ecke der Datenkarte 24 dargestellt. Diese Darstellung macht die konsequente Raumnutzung deutlich. Mit 25 ist die zweite in Fig. 2 untenliegende Datenkarte bezeichnet. Dabei ist ersichtlich, daß die eingesteckten Datenkarten 24 und 25 von den die Kammer 7 frontseitig abdeckenden Klappen 26 und 27 mit nur geringem Abstand umgriffen werden, d. h. daß Bewegungen der Datenkarten 24 und 25 in Folge von Erschütterungen nur in sehr geringem Maße möglich sind und somit keine Kontaktunterbrechungen erfolgen können. wie die Fig. 4 zeigt, überlappen sich die Klappen 26, 27 in der geschlossenen Stellung gegenseitig, womit ein wirksamer Verschmutzungs- und Eingriffsschutz gegeben ist.

Die Fig. 3 zeigt die Datenkartenaufnahme 1 im Zustand des Eingebens der Datenkarte 24. Dabei dient eine in der Kammer 7 zwischen den Eingabeschlitzen 8 und 9 ausgebildete Weiche 28 mit dreieckförmigem Querschnitt als Leitelement. Diese Funktion wird, wie ersichtlich, andererseits auch von den Klappen 26 und 27 ausgeübt, wenn sich die Klappen 26, 27 in der Grenzstellung befinden, in der die Datenkartenaufnahme 1 offen ist. Dabei sind, um ein Hängenbleiben einer einzuführenden Datenkarte 24 bzw. 25 zu vermeiden, die nach außenweisenden Kanten der Klappen 26 und 27 in in der betreffenden Wand der Kammer 7 ausgebildete Hohlkehlen 30 bzw. 31 eingetaucht. Wie aus der Fig. 3 ferner ersichtlich ist, sind in den Seitenwänden 5 und 6 den Eingabeschlitzen 8 und 9 zugeordnete Nute - eine ist mit 29 bezeichnet - angebracht. Diese Maßnahme dient der Bildung von Eingabe-und Führungsebenen, in deren Verlängerung sich die Schächte der Halte- und Kontaktiervorrichtungen 16 bzw. 17 befinden.

Die Klappen 26 und 27 sind in den Seitenwänden 5 und 6 des Gehäuses 2 ortsveränderlich derart gelagert bzw. geführt, daß sie, angetrieben durch Schieber 32 und 33, eine gegensinnige Bewegung ausführen. Der Lagerung der Klappen 26 und 27 dienen jeweils zwei auf einer Achse liegende, an den Klappen 26 und 27 angeformte Lager bzw. Führungszapfen, welche in in den Seitenwänden 5 und 6 deckungsgleich ausgebildete Kulissen 34/35, 36/37, 38/39 und 40/41 eingreifen. Mit 42/43, 44/45 sowie 46/47 und 48/49 sind die in deckungsgleiche Kulissen eingreifende Zapfenpaare bezeichnet. Die Kupplung der Klappen 26 und 27 erfolgt über Stift-Schlitz-Verbindungen, wobei die Lager- und Führungszapfen 42, 43 und 46, 47 verlängert ausgebildet sind und durch die Seitenwände 5 und 6 hindurch in in den Schiebern 32 und 33 ausgebildete Schlitze 50, 51 und 52, 53 eingreifen.

Die Schieber 32 und 33 sind an den Seitenwänden 5 und 6, parallel zu diesen, verschiebbar gelagert. Hierzu sind in den Schiebern 32 und 33 Längsschlitze 54, 55, 56 angebracht, in welche jeweils die Lageransätze von an den Seitenwänden 5, 6 angeformten Ansatzzapfen, von denen in Fig. 2 einer mit 57 bezeichnet ist, eingreifen. Der axialen Sicherung der Schieber 32 und 33 auf den Ansatzzapfen 57 dienen mit den Ansatzzapfen 57 verpresste Flachkopfstifte 58 bis 63. Der Antrieb der Schieber 32 und 33 erfolgt über Verzahnungen 64, welche in in den Schiebern 32 und 33 vorgesehenen Freisparungen 65 ausgebildet sind und in welche auf einer quer zur Datenkartenaufnahme 1 angeordneten Welle 66 befestigte Zahnräder 67 und 68 eingreifen. Die als Vierkantwelle ausgebildete Welle 66 ist auf einem Träger 69 gelagert, wobei die Lagerung über an den Zahnrädern 67 und 68 angeformte, nicht näher bezeichnete Bunde erfolgt, die in an dem Träger 69 ausgebildete Lagerschenkel aufgenommen sind. Die Welle 66 steht über ein aufgestecktes schrägverzahntes Zahnrad 70, das in geeigneter Weise durch am Träger 69 angeformte Wangen 71 und 72 axial gesichert ist, in getrieblicher Verbindung mit dem bereits erwähnten Elektromotor 23, der ebenfalls auf dem Träger 69 befestigt ist. Das heißt, die Schieber 32 und 33 werden ausgehend von dem Elektromotor 23 über eine auf dessen Motorwelle befestigte Schnecke 73, ein nicht dargestelltes Schneckenrad, ein gleichachsig angeordnetes Stirnrad 74, ein mit diesem in Bigriff stehendes Stirnrad 75, ein gleichachsig mit diesem angeordnetes jedoch nicht sichtbares Zahnrad, das mit diesem kämmenden Zahnrad 70, die Welle 66 und die Zahnräder 67 und 68 angetrieben. Mit 76 ist ein auf dem Träger 69 befestigter, den nicht dargestellten Achsen der zwischen der Schnecke 73 und dem Zahnrad 70 vorgesehenen Zahnrädern zugeordneter Lagerbock bezeichnet.

Die Zahnräder 67 und 68 greifen durch in den Seitenwänden 5 und 6 vorgesehene Aussparungen 77 hindurch und stehen mit den Verzahnungen 64 der Schieber 32 und 33 in Eingriff. Der Träger 69 und die darauf angeordneten Getriebeelemente bilden somit eine funktionsfertige Antriebsbaugruppe 78, die zwischen den Seitenwänden 5 und 6 befestigt ist. Der Befestigung dienen zwei Schrauben, von denen eine mit 79 bezeichnet ist. Mit 80 und 81 sind ebenfalls paarweise vorgesehene Zapfen bezeichnet, die der Lagefixierung der Antriebsbaugruppe 78 dienen.

Der Vollständigkeit halber sei noch erwähnt, daß bei dem dargestellten Ausführungsbeispiel die Gehäusebauteile nicht durch Rastelemente miteinander verbunden sind, sondern durch eine mit 82 bezeichnete Stange, die in geeigneter Weise zwischen den Seitenwänden 5 und 6 mittels Schrauben 83 verspannt ist. Außerdem stellt die verschraubte Antriebsbaugruppe 78 eine stabilisierende Verstrebung der Montageschenkel der Seitenwände 5 und 6 dar.

## Patentansprüche

1. Datenkartenaufnahme mit einer Vorrichtung zum unzugänglichen Abdecken wenigstens eines dem Eingeben bzw. Entnehmen von Datenkarten zugeordneten Eingabeschlitzes und einem Gehäuse mit im wesentlichen quaderförmigen Umrissen wobei wenigstens eine durch Eingabe-/Entnahmesignale steuerbare Klappe (26, 27) vorgesehen ist und die Klappe (26, 27) in in parallelen Seitenwänden (5, 6) des Gehäuses (2) ausgebildeten Kulissen (34/35, 36/37, 38/39, 40/41) ortsveränderlich geführt ist, **dadurch gekennzeichnet, daß** wenigstens ein zu den Seitenwänden (5, 6) parallel bewegter Schieber (32, 33) vorgesehen ist, welcher mit der Klappe (26, 27) über eine Stift-Schlitz-Verbindung (42/50, 43/51, 46/52, 47/53) in Eingriff steht und
daß der Schieber (32, 33) mit einem in seiner Drehrichtung umsteuerbaren Elektromotor (23) getrieblich verbunden ist.

2. Datenkartenaufnahme nach Anspruch 1,
**dadurch gekennzeichnet,**
**daß** die Klappe (26, 27) derart ortsveränderlich geführt ist,
**daß** die in einer ersten Grenzstellung der Klappe (26, 27) parallel zur Frontfläche des Gehäuses (2) nach innen weisende Klappenfläche in einer zweiten Grenzstellung der Klappe (26, 27) den Datenkarten (24, 25) beim Eingeben in die Datenkartenaufnahme (1) als Leitfläche dient.

3. Datenkartenaufnahme nach Anspruch 1,
**dadurch gekennzeichnet,**
**daß** an der Klappe (26, 27) den Kulissen (34/35, 36/37, 38/39, 40/41) zugeordnete Lager- bzw. Führungszapfen (42, 43, 44, 45, 46, 47, 48, 49) angeformt sind,
**daß** zwei Schieber (32, 33) vorgesehen sind, welche jeweils an einer Seitenwand (5, 6) außerhalb des Gehäuses (2) wandparallel verschiebbar sind und
**daß** zwei auf einer gemeinamen Achse liegende Führungszapfen (42/43, 46/47) der Klappe (26, 27) derart ausgebildet sind
**daß** sie durch die Seitenwände (5,6) hindurch in in den Schiebern (32, 33) ausgebildete Schlitze (50, 51, 52, 53) eingreifen.

4. Datenkartenaufnahme nach Anspruch 1,
**dadurch gekennzeichnet,**
**daß** bei Verwendung von zwei Klappen (26, 27) diese in einer ersten Grenzstellung sich gegenseitig teilweise überlappen.

5. Datenkartenaufnahme nach Anspruch 1,
**dadurch gekennzeichnet,**
**daß** das Gehäuse (2) eine frontseitig offene Kammer (7) aufweist, an deren Rückwand zwei parallele Eingabeschlitze (8, 9) ausgeformt sind
**daß** zwischen den Eingabeschlitzen (8, 9) eine die Datenkarten (24, 25) leitende Weiche (28) vorgesehen ist und daß das Gehäuse (2) außerdem derart ausgebildet ist, daß den Datenkarten (24, 25) zugeordnete vorkonfektionierte Halte- und Kontaktiervorrichtungen (16, 17) einsetz- und befestigbar sind.

6. Datenkartenaufnahme nach Anspruch 5,
**dadurch gekennzeichnet,**
**daß** das Gehäuse (2) aus zwei gleichgestalteten Gehäusebauteilen besteht und
**daß** die Fügeebene (4) der Gehäusebauteile im wesentlichen parallel zu den Seitenwänden (5, 6) des Gehäuses (2) vorgesehen ist.

7. Datenkartenaufnahme nach Anspruch 5,
**dadurch gekennzeichnet,**
**daß** in den Seitenwänden (5, 6) des Gehäuses (2) mit der Eingabe- und Führungsebene der Datenkarten (24, 25) fluchtende und von der Rückseite des Gehäuses (2) zugängl iche und der Höhe der Halte- und Kontaktiervorrichtungen (16, 17) entsprechende Nute (14, 15) ausgebildet und in der Verlängerung der Nute (14, 15) an den Seitenwänden (5, 6) Rastklinken (10, 11, 12, 13) angeformt sind.

8. Datenkartenaufnahme nach Anspruch 1,
**dadurch gekennzeichnet,**
**daß** der Elektromotor (23) getrieblich mit einer Welle (66) verbunden ist, die an ihrem jeweiligen Ende ein Zahnrad (67, 68) trägt und
**daß** die Zahnräder (67, 68) durch jeweils eine Seitenwand (5, 6) hindurchgreifen und mit an den Schiebern (32, 33) ausgebildeten Verzahnungen (64) in Eingriff stehen.

9. Datenkartenaufnahme nach Anspruch 8,
**dadurch gekennzeichnet,**
**daß** der Elektromotor (23), die Welle (66) und die Getriebeelemente (67, 68, 70, 73, 74, 75) auf einem gemeinsamen Träger (69) angeordnet und als Antriebsbaugruppe (78) in das Gehäuse (2) einsetzbar sind.

10. Datenkartenaufnahme nach Anspruch 8,
**dadurch gekennzeichnet,**
**daß** bei einer Gehäuseausbildung derart,
**daß** die Seitenwände (5, 6) außerhalb der Kammer (7) als freistehende Montageschenkel ausgebildet sind, der Träger (69) als Verstrebung zwischen den Seitenwänden (5, 6) vorgesehen ist.

## Claims

1. Data-card receptacle having a device for inaccessibly covering at least one input slot, which is assigned to the insertion and removal of data cards, and a housing with essentially cuboidal contours, at least one flap (26, 27) which can be controlled by input/removal signals being provided, and the flap (26, 27) being guided in a positionally changeable manner in slotted guides (34/35, 36/37, 38/39, 40/41) formed in parallel side walls (5, 6) of the housing (2), **characterized in that** at least one slide (32, 33) is provided which is moved parallel to the side walls (5, 6) and is in engagement with the flap (26, 27) via a pin-end-slot connection (42/50, 43/51, 46/52, 47/53), and **in that** the slide (32, 33) is drive connected to an electric motor (23) which can be reversed in its direction of rotation.

2. Data-card receptacle according to Claim 1, **characterized in that** the flap (26, 27) is guided in a positionally changeable manner in such a way that the flap surface, which points inwards parallel to the front surface of the housing (2) in a first limit position of the flap (26, 27), is used in a second limit position of the flap (26, 27) by the data cards (24, 25) as a guiding surface when they are inserted into the data-card receptacle (1).

3. Data-card receptacle according to Claim 1, **characterized in that** bearing and guiding pins (42, 43, 44, 45, 46, 47, 48, 49) which are assigned to the slotted guides (34/35, 36/37, 38/39, 40/41) are integrally formed on the flap (26, 27), **in that** two slides (32, 33) are provided which can be displaced in each case on a side wall (5, 6) outside the housing (2) parallel to the wall, and **in that** two guiding pins (42/43, 46/47) of the flap (26, 27) which are situated on a common axis are designed in such a manner that they engage through the side walls (5, 6) into slots (50, 51, 52, 53) formed in the slides (32, 33).

4. Data-card receptacle according to Claim 1, **characterized in that**, if two flaps (26, 27) are used, they partially overlap one another in a first limit position.

5. Data-card receptacle according to Claim 1, **characterized in that** the housing (2) has a chamber (7) which is open on the front side and on the back wall of which two parallel input slots (8, 9) are formed, **in that** a distributor (28) which guides the data cards (24, 25) is provided between the input slots (8, 9), and **in that** the housing (2) is also designed in such a manner that preassembled retaining and contacting devices (16, 17) which are assigned to the data cards (24, 25) can be inserted and fastened.

6. Data-card receptacle according to Claim 5, **characterized in that** the housing (2) comprises two housing components of identical design, and **in that** the joining plane (4) of the housing components is provided essentially parallel to the side walls (5, 6) of the housing (2).

7. Data-card receptacle according to Claim 5, **characterized in that** grooves (14, 15) which are aligned with the input and guiding plane of the data cards (24, 25) and are accessible from the rear side of the housing (2) and correspond to the height of the retaining contacting devices (16, 17) are formed in the side walls (5, 6) of the housing (2), and snap-in latches (10, 11, 12, 13) are integrally formed on the side walls (5, 6) as an extension of the grooves (14, 15).

8. Data-card receptacle according to Claim 1, **characterized in that** the electric motor (23) is drive connected to a shaft (66) which bears gearwheels (67, 68) at its respective ends, and **in that** the gearwheels (67, 68) reach through a respective side wall (5, 6) and are in engagement with toothings (64) formed on the slides (32, 33).

9. Data-card receptacle according to Claim 8, **characterized in that** the electric motor (23), the shaft (66) and the gear mechanism elements (67, 68, 70, 73, 74, 75) are arranged on a common support (69) and can be inserted as a driving subassembly (78) into the housing (2).

10. Data-card receptacle according to Claim 8, **characterized in that**, if the housing is designed in such a manner that the side walls (5, 6) outside the chamber (7) are designed as self-supporting installation legs, the support (69) is provided as a cross-strut between the side walls (5, 6).

## Revendications

1. Dispositif de réception de cartes de données, avec un système de recouvrement inaccessible d'au moins une fente d'insertion affectée à l'insertion resp. au retrait de cartes de données et avec un boîtier présentant des contours sensiblement quadratiques,
au moins un volet (26, 27) pouvant être piloté par des signaux d'insertion/de retrait étant prévu et le volet (26, 27) étant guidé de manière mobile dans des coulisses (34/35, 36/37, 38/39, 40/41) formées dans des parois parallèles (5, 6) du boîtier (2),
**caractérisé en ce que**
au moins un coulisseau (32, 33) déplacé parallèlement aux parois latérales (5, 6) et s'accrochant au volet (26, 27) par l'intermédiaire d'une liaison par cheville/fente (42/50, 43/51, 46/52, 47/53) est prévu et **en ce que** le coulisseau (32, 33) est relié par engrenage à un moteur électrique (23) à sens de rotation inversable.

2. Dispositif de réception de cartes de données selon la revendication 1,
**caractérisé en ce que**
le volet (26, 27) est guidé de manière mobile, de manière à ce que la surface du volet qui, dans une première position extrême du volet (26, 27), parallèle à la surface frontale du boîtier (2), est dirigée vers l'intérieur, dans une seconde position extrême du volet (26, 27) fait office de surface de guidage des cartes de données (24, 25), lors de leur insertion dans le dispositif de réception des cartes de données (1 ).

3. Dispositif de réception de cartes de données selon la revendication 1,
**caractérisé en ce que**
des tourillons de logement resp. de guidage (42, 43, 44, 45, 46, 47, 48, 49) associés aux coulisses (34/35, 36/37, 38/39, 40/41) sont moulés sur le volet (26, 27), **en ce que** deux coulisseaux (32, 33), dont chacun est déplaçable sur une paroi latérale (5, 6) à l'extérieur du boîtier (2), parallèlement à ladite paroi sont prévus et **en ce que** deux tourillons de guidage (42/43, 46/47) du volet (26, 27), situés sur un axe commun sont conçus de manière à s'accrocher en traversant les parois latérales (5, 6) dans des fentes (50, 51, 52, 53) conçues dans les coulisseaux (32, 33).

4. Dispositif de réception de cartes de données selon la revendication 1,
**caractérisé en ce que**
lors de l'utilisation de deux volets (26, 27), dans une première position extrême, ces derniers se chevauchent mutuellement de manière partielle.

5. Dispositif de réception de cartes de données selon la revendication 1,
**caractérisé en ce que**
le boîtier (2) présente un logement (7) ouvert du côté frontal, sur la paroi arrière duquel deux fentes d'insertion (8,9) parallèles sont moulées,
entre les fentes d'insertion (8, 9) une aiguille (28) guidant la carte de données (24, 25) est prévue et **en ce que** par ailleurs, le boîtier (2) est conçu de manière à ce que des dispositifs de maintien et de contactage (16, 17) préfabriqués et associés aux cartes de données (24, 25) puissent être intégrés et fixés.

6. Dispositif de réception de cartes de données selon la revendication 5,
**caractérisé en ce que**
le boîtier (2) est constitué de deux éléments de boîtier de conception identique et **en ce que** le niveau des joints (4) des éléments de boîtier est prévu de manière sensiblement parallèle aux parois latérales (5, 6) du boîtier (2).

7. Dispositif de réception de cartes de données selon la revendication 5,
**caractérisé en ce que**
des rainures (14, 15) appropriées situées à fleur du plan d'insertion et de guidage des cartes de données (24, 25), accessibles par la face arrière du boîtier (2) et correspondant à la hauteur des dispositifs de maintien et de contactage (16, 17) sont conçues dans les parois latérales (5, 6) du boîtier (2) et **en ce que** des cliquets (10, 11, 12, 13) sont moulés sur les parois latérales (5, 6), dans le prolongement de la rainure (14, 15).

8. Dispositif de réception de cartes de données selon la revendication 1,
**caractérisé en ce que**
le moteur électrique (23) est relié par engrenage à un arbre (66), qui à chaque extrémité porte une route dentée (67, 68) et **en ce que** les roues dentées (67, 68) traversent chacune une paroi latérale (5, 6) et s'engrènent dans des dentures (64) formées sur les coulisseaux (32, 33).

9. Dispositif de réception de cartes de données selon la revendication 8,
**caractérisé en ce que**
le moteur électrique (23), l'arbre (66) et les éléments de transmission (67, 68, 70, 73, 74, 75) sont disposés sur un support commun (69) et sont intégrables dans le boîtier (2), en tant que module d'entraînement (78).

10. Dispositif de réception de cartes de données selon la revendication 8,
**caractérisé en ce que**
pour une conception du boîtier telle que les parois latérales (5, 6) soient réalisées à l'extérieur du logement (7), sous forme de branches de montage indépendantes, le support (69) est prévu en tant qu'entretoisement entre les parois latérales (5, 6).
